# EUROPEAN PATENT APPLICATION

(11) **EP 1 925 551 A1**
(43) Date of publication of application: **28.05.2008**
(21) Application number: 06256040.4
(22) Date of filing: 24.11.2006
(51) Int. Cl.: B64D 15/12, F02C 7/047

(54) **Ice protection system with noise abatement**

(71) Applicant: GKN Aerospace Transparency Systems (Luton) Limited, Percival Way, London Luton Airport Luton, Bedfordshire LU2 9PQ (GB)
(72) Inventor: Bardwell, Anthony London Luton Airport, Luton, Bedfordshire LU2 9PQ (GB)
(74) Representative: Meldrum, David James

(57) **Abstract**

A leading edge structure for an aircraft and a method of making the same. The leading edge structure includes an outer skin (60), a laminated electric heater (62) attached to an inner surface of the outer skin, and a matrix of holes that pass through the outer skin and the laminated electric heater. The holes that pass through the outer skin are substantially aligned with the holes that pass through the laminated electric heater.

## Description

### BACKGROUND OF THE INVENTION

This invention relates to a leading edge structure for an aircraft, and to a method for making such a structure.

Reduction of aircraft noise is an ongoing requirement for all manufacturers. New legislation will drive designers to consider all aspects of possible noise abatement. One area that is under constant review is the noise emanating from the engine nacelles of large civil aircraft.

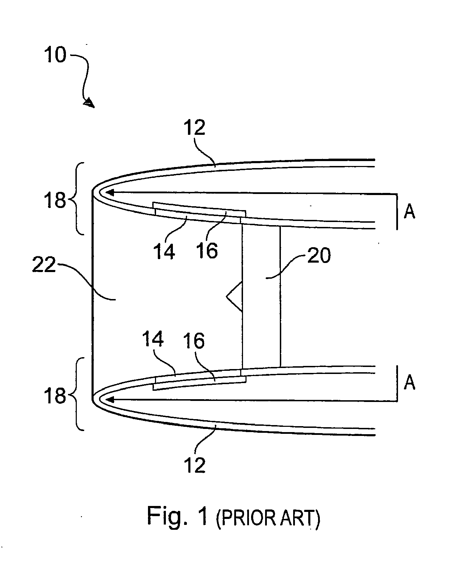

An example of an aircraft engine 10 incorporating a known system for noise abatement is shown in Figure 1.

The engine includes an intake 22, fan blades shown generally at 20 and a leading edge structure shown generally at 18. For an aircraft engine of this kind, the target noise is generated from within the front-end compressor fan blades 20 and manifests itself as a "buzz saw" sound with high-pitched frequencies.

As shown in Figure 1, the known noise abatement system includes a portion 14 of the outer skin 12 of the engine 10 that is perforated. This portion 14 is located inside the intake 22, adjacent the fan blades 20. The portion 14 of the outer skin 12 that is with a perforated surface is backed with a sound absorption layer such as a honeycomb structure bonded on an inner surface of the outer skin 12. In this way, noise generated in the fan blades 20 can be absorbed.

A problem with noise abatement systems of the kind shown in Figure 1 is that perforated portion 14 of the outer skin 12 cannot generally run to the forward end of the intake lip due to the possibility of interference with the workings of a traditional hot gas ice protection system, which is typically incorporated into the leading edge 18 of an aircraft engine. Hot gas ice protection systems typically bleed off hot gas from within the engine 12 and direct it onto an inner surface of the outer skin 12 near the leading edge 18. This is shown schematically in Figure by the arrow labelled A. If the surface of the leading edge were perforated, the hot gas would escape from the engine, thereby impairing the ability of the ice protection system to prevent ice build-up.

Since hot gas ice protection systems are known to impair the fuel efficiency of an aircraft engine, alternative ice protection systems have been developed. For example, ice protection systems incorporating electro-thermal heaters are known. The heaters are typically attached to an inner surface of the leading edge to prevent ice build up on the outer skin thereof. Systems of this kind also increase the design flexibility of leading edge structures, since they do not involve the bulky and cumbersome pipe work associated with hot gas systems. This can allow leading edge designs with lower drag to be implemented.

US 4,743,740 and EP 1,495,963 both describe designs that incorporate electric heaters and noise abatement features.

US 4,743,740 describes a heating element that is buried in a panel that also includes an acoustical laminate having a honeycomb core, and a porous outer sheet. The outer sheet does not include holes or perforations as described above, but is porous and comprises metallic fibrous felt, metal fabric or of woven metal fibres. The panel is constructed by bonding together the various components using, for example, epoxy resin.

EP 1,495,963 describes a method and apparatus for noise abatement and ice protection of an aircraft engine nacelle inlet lip. The apparatus includes an acoustic panel having a solid back skin, a honeycomb core and an acoustically permeable front skin, which is perforated. The apparatus also includes a low power electronic ice protection system that is bonded onto the acoustically permeable front skin of the acoustic panel.

### SUMMARY OF THE INVENTION

Particular and preferred aspects of the invention are set out in the accompanying independent and dependent claims. Combinations of features from the dependent claims may be combined with features of the independent claims as appropriate and not merely as explicitly set out in the claims.

According to an aspect of the invention, there can be provided a method of making a leading edge structure for an aircraft. The method includes attaching a laminated electric heater to an inner surface of an outer skin of the leading edge structure. The method also includes forming a matrix of holes that pass through the outer skin and the laminated electric heater. The holes that pass through the outer skin are substantially aligned with the holes that pass through the laminated electric heater.

According to another aspect of the invention, there can be provided a leading edge structure for an aircraft. The leading edge structure includes an outer skin. The leading edge structure also includes a laminated electric heater attached to an inner surface of the outer skin. The leading edge structure further includes a matrix of holes that pass through the outer skin and the laminated electric heater. The holes that pass through the outer skin are substantially aligned with the holes that pass through the laminated electric heater.

The provision of a leading edge structure with substantially aligned holes passing through both the outer skin and a laminated electric heater allows the advantageous implementation of an electro-thermal de-icing system in conjunction with sound abatement. The alignment of the holes through both the outer skin and a laminated electric heater allows the sound abatement system to function substantially unhindered by the presence of the heater.

In accordance with an embodiment of the invention, the holes are formed after the laminated electric heater has been attached to the inner surface, whereby aligned holes can be readily produced.

The inner surfaces of the holes that pass through the laminated electric heater can be electrically insulated. This can serve to electrically insulate a resistive element of the heater such as a metallic layer from the outer skin, which may typically be metallic. The insulation can also protect the heater from the elements and, for example, hinder corrosion.

The electrical insulation of the inner surfaces of the holes that pass through the laminated electric heater can be achieved using an anodisation process. Anodisation has the advantage that it can be used to insulate the inner surfaces of holes that are relatively small (e.g. 0.02mm diameter) without blocking them. The anodisation process can include passing an electrolyte though the of holes under pressure.

The holes can be formed by a laser drilling process. Laser drilling can allow a regular matrix of holes having a well determined diameter and a high degree of uniformity to be produced.

To attach the laminated electric heater to the inner surface, the inner surface can first be coated with an electrically insulating layer. This layer can serve to electrically insulate resistive elements of the heater from the outer skin. A metallic layer (for forming a resistive element of the heater) can be applied to the electrically insulating layer. The metallic layer can include aluminium.

In alternative design, the laminated electric heater can include one or more heater mats. The heater mats can include aluminium heater elements.

The matrix of holes can have a density of between about 6% and about 11 % surface coverage of the outer skin. In particular, the matrix of holes can have a density of about 7% surface coverage of the outer skin. The holes can be between about 0.02 mm and about 0.2 mm in diameter.

According to a further aspect of the invention, there can be provided a method of making an aircraft engine including the method described above.

According to a further aspect of the invention, there can be provided an aircraft engine including the structure described above.

### BRIEF DESCRIPTION OF THE DRAWINGS

For a better understanding of the invention and to show how the same may be carried into effect reference is now made by way of example only to the accompanying drawings in which like reference signs relate to like elements and in which:
Figure 1 schematically shows a known construction for providing de-icing and noise abatement in an aircraft engine;
Figure 2 schematically shows an example leading edge structure having de-icing and noise abatement capability in accordance with an embodiment of the invention;
Figure 3 schematically shows a leading edge structure including an outer skin and a laminated electric heater in accordance with an embodiment of the invention;
Figure 4 schematically shows the steps for making a leading edge structure in accordance with an embodiment of the invention;
Figure 5 schematically shows an example of a leading edge structure including a heater mat in accordance with an embodiment of the invention;
Figure 6 schematically shows an example of the components of a heater mat of the kind shown in Figure 5; and
Figure 7 schematically illustrates an example method for electrically insulating an inner surface of the holes in a laminated electric heater in accordance with an embodiment of the invention.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the spirit and scope of the present invention as defined by the appended claims.

### DESCRIPTION OF PARTICULAR EMBODIMENTS

Particular embodiments will now be described by way of example only in the following with reference to the accompanying drawings.

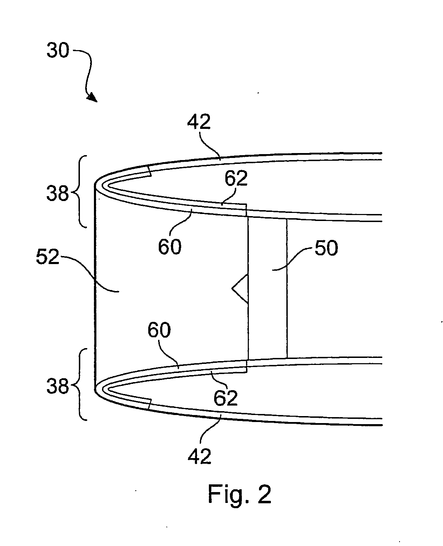

Figure 2 schematically shows an example leading edge structure 38 having de-icing and noise abatement capability in accordance with an embodiment of the invention. In this example, the leading edge structure 38 is incorporated into an engine nacelle of an aircraft engine. However, it is envisaged that a leading edge structure according to an embodiment of this invention could be incorporated into other leading edges of an aircraft, where both ice protection and noise abatement is required.

The leading edge structure 38 includes an outer skin portion 60 and a laminated electric heater 62. The laminated electric heater 62 is attached to an inner surface of the outer skin portion 60. As described below, the portion 60 and the laminated electric heater include a matrix of holes passing there-through.

In this example, the leading edge structure 38 forms the leading edge at an intake 52 of an aircraft engine 30, and the outer skin portion 60 is incorporated into an outer skin 42 of the engine 30. The leading edge structure can extend over an area of the leading edge of the aircraft engine 30 that is selected according to design requirements. The extent of the structure 38 can, for example, be chosen to optimise noise protection while ensuring that the areas of the intake that are most susceptible to ice build up are covered.

In this example, the leading edge structure 38 extends from a location outside the intake 52 to a position that is substantially adjacent the fans 50 of the engine 30. The proximity of the structure 38 to the fans 50 optimises the ability of the structure 38 to absorb noise emanating from the fans 50. Additional noise abatement, not usually available in conventional systems, stems from the fact that the structure extends some distance away from the fans 50 to encompass the front end of the engine. Moreover, since the structure 38 in this example extends around the edges of the intake 52, the leading edge areas of the engine 30 that are most susceptible to ice protection (typically the lip of the intake) receives appropriate ice protection.

In accordance with an embodiment of the invention, the outer skin portion 60 and the laminated electric heater 62 are perforated. A matrix of holes passes through the outer skin portion 60 and also through the laminated electric heater 62. This matrix of holes allows for noise abatement by allowing sound to pass through the outer skin portion 60 and laminated electric heater 62, as opposed to being reflected by the outer skin portion and thereafter leaving the engine 30. The holes may also serve to absorb and dissipate the sound to some degree. In accordance with an embodiment of the invention, additional sound abatement features can be provided. In particular, and as described below, a sound absorbing layer may be positioned over the matrix of holes in order to receive and absorb sound passing through the outer skin portion 60 and laminated electric heater 62.

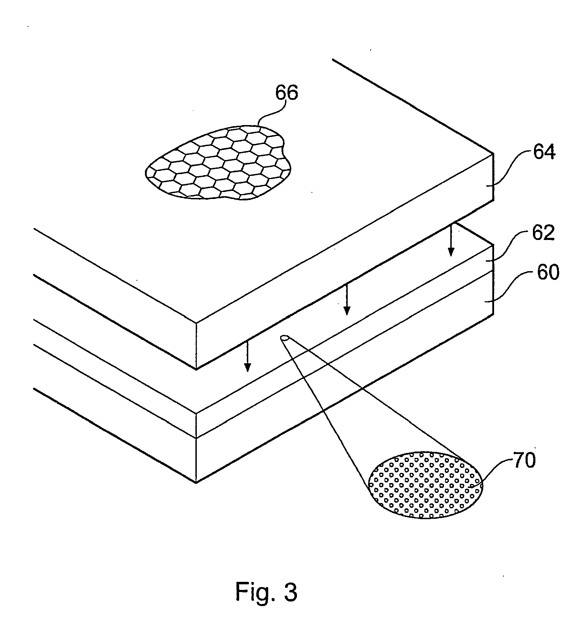

Figure 3 shows in more detail an example of a leading edge structure in accordance with an embodiment of the invention.

In this example, the structure includes a number of layers. In particular, and as described above, the structure includes an outer skin portion 60 and a laminated electric heater 62. The outer skin portion 60 and laminated electric heater 62 include a matrix of holes 70, shown schematically in Figure 3. The holes can be formed in any pattern that is suitable of noise abatement. For example, the holes may be formed in a regular lattice such as a square or hexagonal lattice. In the example shown in Figure 3, a hexagonal lattice is used.

As described in more detail below, the holes that pass through the outer skin portion 60 are substantially aligned with the holes that pass through the laminated electric heater 62. The substantial alignment of the holes enhances the noise abatement capability of the structure 38.

The diameter of the holes can be chosen for optimal noise abatement. For example, the size of the holes can be chosen to match the peak frequency or frequencies of the noise that is produced by a particular engine design. The holes may not all be of the same diameter, and the matrix may include holes of different sizes, tailored for a particular set of frequencies produced by the engine. In particular, the holes can have a diameter between about 0.02 mm and about 0.2 mm.

The density of the holes in the matrix can also be chosen to optimise noise absorption. For a given hole diameter (assuming that the matrix includes holes of uniform hole diameter), the hole density can be varied by varying the lattice spacing of the holes, or indeed the type of lattice used. For example, a hexagonal lattice may lead to a higher hole density for a given hole size and lattice spacing. In particular, the holes can have a density of between about 6% and about 11% surface coverage of the outer skin portion. More particularly, the holes can have a density of about 7% surface coverage of the outer skin portion 60, which has been found in some examples to produce optimal sound abatement.

As described above, and as shown schematically in Figure 3, the structure can also include a sound absorption layer 64. In accordance with an embodiment of the invention, a solid back sheet (not shown in Figure 3) may also be installed on top of the sound absorption layer 64. In some embodiments, more than one sound absorption layer 64 can be used.

The layer 64 can be positioned to substantially cover all or part of the matrix of holes 70 in the outer skin portion 60 and laminated electric heater 62. The layer may be attached to the laminated electric heater 62 using any suitable means, such as an adhesive layer. The layer 62 can be a layer of the kind known in the art for absorbing noise according to existing noise abatement systems. For example, the layer 62 may have a honeycomb structure 66 as shown schematically in Figure 3. Where more than one layer 64 is used, the honey comb structures may be staggered to provide enhanced noise abatement. Sound passing through the matrix of holes in the structure passes into the honey comb structure and absorbed therein. Again, because the holes that pass through the outer skin portion 60 and the laminated electric heater 62 are substantially aligned, the degree to which those layers inhibit the transmission of sound for absorption in the layer 64 is reduced.

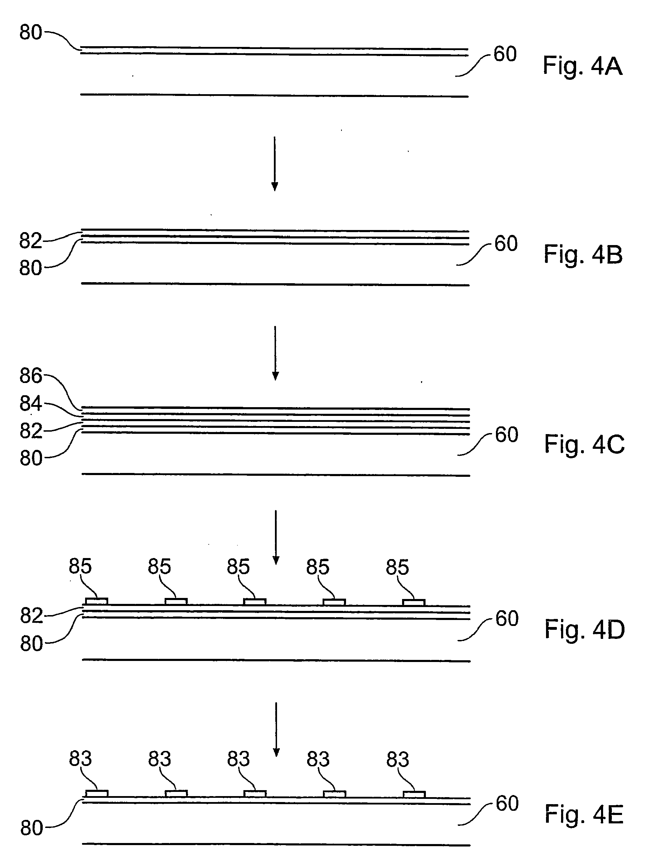

Figure 4 shows a number of steps for creating a leading edge structure according to an embodiment of the invention.

A first stage (Figure 4A) in the manufacture of a leading edge structure can include applying an electrically insulating layer 80 to an outer skin portion 60. The outer skin portion may typically comprise an electrically conductive material such as a metal (e.g. titanium, aluminium). The purpose of the electrically insulating layer 80 is to insulate further components of the laminated electric heater from the outer skin portion 60. The electrically insulating layer 80 can comprise any suitable dielectric. The type of layer that is chosen can be selected so that it bonds well to the outer skin portion 60. By way of example, the electrically insulating layer 80 may include a resin that is applied to the outer skin portion 60 using a spraying or dipping process.

As shown in Figure 4B, an electrically conductive (e.g. metallic) layer 82 can be applied to the electrically insulating layer 80. In accordance with an embodiment of the invention, the electrically conductive layer 82 can be applied to the insulating layer 80 using an electroless plating method. This process can involve immersing the structure shown in Figure 4A in the appropriate chemical solution, and using masking to ensure that only the desired areas of the structure are coated.

The conductive layer 82 forms the resistive heating element of the laminated electric heater of the leading edge structure. The conductive layer can comprise, for example, aluminium, which when thinly coated has sufficiently high resistivity to produce the desired amount of Joule heating at lower currents. As described below, the conductive layer 82 can be applied as a substantially homogenous layer, and then patterned to produce the desired heating element tracks.

Figure 4C shows a first stage in the patterning process. An etch resist layer 84 (comprising, for example an etch resist ink) can be applied to the electrically conducting layer 82. The etch resist layer 84 can be applied to using, for example, a spraying or dipping process. A mask 86 can then be applied over the etch resist layer 84. The mask 86 can be applied using, for example, a silk screening process or a laser-printing process. The mask can also comprise an object such as a metal screen that is laid over the etch resist layer 84. The structure can then be exposed to radiation (for example UV light) through the mask to cure the desired areas of the etch resist layer 84. The pattern on the mask 86 can correspond to the 'negative' of the desired layout of the heater element tracks.

After the desired portions of the etch resist layer 84 have been cured, the mask 86 can be removed and the undesired portions of the etch resist layer (for example, the uncured portions) can be washed away, leaving an arrangement of the kind shown in Figure 4D. As shown schematically in Figure 4D, the arrangement now includes a series of patterned etch resist portions 85, that correspond to the desired track layout of the heater element of the laminated electric heater.

The arrangement shown in Figure 4D can then be etched, to remove the portions of the electrically conducting layer 82 that are not shielded by the etch resist portions 85. Following the etch, the etch resist portions 85 can be removed, leaving the structure shown in Figure 4E. The structure in Figure 4E comprises the desired element tracks 83.

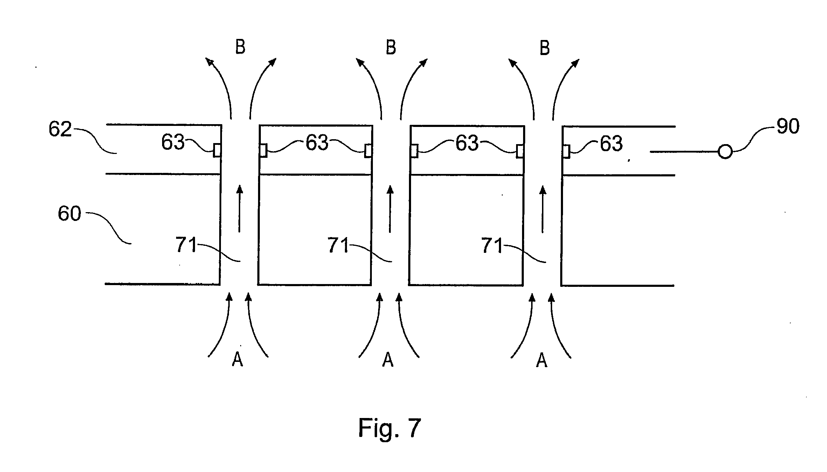

The required electrical power connections can then be made to the heater tracks 83 and checks can be made as to the integrity of the tracks 83 (e.g. resistance measurements). The structure shown in Figure 4E may then be covered in a further insulating layer. For example, the heater tracks 83 can be insulated using a resin of the kind described above in relation to the insulating layer 80, or some other suitable dielectric. In one example, the structure can be insulated using an anodising process of the kind described below. In accordance with an embodiment of the invention, the insulating layer can be applied by anodising the heater tracks at the same time as an inner surface of the matrix of holes is anodised as described below in relation to Figure 7.

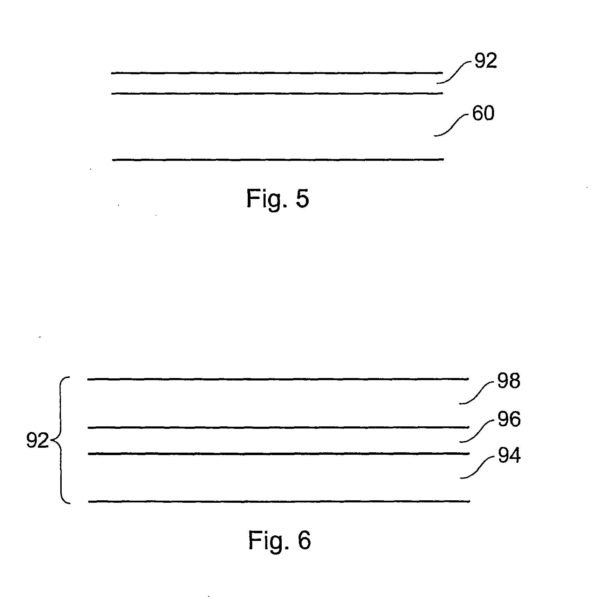

As shown in Figure 5, in an alternative embodiment of the invention, one or more heater mats 92 can be applied to an outer skin portion 60. The mats 92 can be applied using an adhesive or any other suitable means. In one embodiment, the mats can comprise conventional heater mats of the kind known in the art. The mats may also comprise heater elements made of aluminium - as described above, aluminium is advantageous in that it produces sufficient Joule heating at low currents to provide effective ice protection.

The structure of an example of a heater mat 92 incorporating aluminium is shown in Figure 6. In this example, the structure includes a layer of aluminium 96 that has been prepared on a resin/glasscloth composite substrate 94. The aluminium layer can, for example, be prepared by a metal spraying process. a process would allow the resistance per unit length and width to be controlled, to provide for a uniform heating intensity. This can also allow the heater to be arranged to have the appropriate heating intensity where the structure shape and aerodynamics demand, and the correct terminal resistance to be achieved to allow connection to a normal aircraft supply.

As shown in Figure 6, one or more further layers 98 of resin and glass cloth can be layered over the aluminium layer 96 to provide electrical and environmental isolation. The heater mat 92 can be bonded to the outer skin portion 60, or alternatively the heater mat 92 can be manufactured in situ on the outer skin portion 60.

Accordingly, there have been described two examples of the attachment of a laminated electric heater to an outer skin portion in accordance with embodiments of this invention.

In accordance with an embodiment of the invention, after attachment of the laminated electric heater to the outer skin portion, a matrix of holes can be formed that pass through the structure. In particular, the holes pass through both the laminated electric heater and the outer skin portion.

The matrix of holes can be formed using any suitable micromachining process. In one embodiment, laser drilling can be used. Laser drilling constitutes a process that allows for precision machining the hole matrix, whereby holes having a high degree of uniformity can be produced, in terms or both shape and size.

Moreover, laser drilling can allow a highly regular matrix to be produced. For example, laser drilling can be carried out by using a computer controlled laser positioning device such as a Computer Numerical Control (CNC) machine. Such a machine could, for example, be a six or seven axis precision robot arm or a six or seven axis CNC machine. In these examples a laser is directed from the laser source to the part being machined by a flexible fibre optic. Thus the laser head is small enough to be able to get inside typical aircraft leading edge structures such as engine nacelles and intakes to allow appropriate machining. Typical CNC machine accuracy allows the hole pitch and density to be accurately controlled. The hole sizes can be controlled by the size of the laser beam itself or by using a "trepanning" motion provided by the CNC machine.

In accordance with an embodiment of the invention, since the matrix of holes is formed after attachment of the laminated electric heater to the outer skin portion, the holes that that are produced in the laminated electric heater and the outer skin portion are automatically substantially aligned. This is in contrast the some prior manufacture methods in which the features of the various layers in a structure are produced separately and then adhered together (see, for example, the structures described in US 4,743,740 and EP 1,495,963). In such prior examples, there is inevitably some degree of misalignment between the features in the various layers, which impairs the performance of the system.

It will also be understood that as described herein, the sizes of the holes involved can be very small (e.g. 0.2 mm), and with feature sizes on this scale it would be extremely difficult to align if the holes in the outer skin portion and the laminated electric heater were produced separately, before attaching the laminated electric heater to the outer skin portion.

Since the holes pass through both the outer skin portion and the laminated electric heater, the inner surfaces of the holes may include exposed edges of the electrically conducting layer of the heater that forms the heating element. Since, in use, these edges will be exposed to the elements, degradation such as corrosion of the heating element may occur. This could lead to failure of the laminated electric heater. Moreover, the exposed edges may lead to short circuiting and/or earth leakage if water (e.g. rain or condensation) is present.

In accordance with an embodiment of the invention, an inner surface of the holes can be electrically insulated against short circuiting and earth leakage. This also protects against corrosion. The portions of the inner surfaces that are electrically insulated can be chosen in accordance with design requirements. In one embodiment, only the exposed edges of the heater element are insulated. In other examples, these edges and also the edges of the outer skin portion can be insulated, for additional protection.

Figure 7 schematically illustrates an example process for electrically insulating the inner surfaces of the holes. In this example, the edges of the heater element are anodised. This involves making the electrically conducting layer in the laminated electric heater 62 one of the electrodes 90 in the anodising process. As shown in Figure 7, the leading edge structure including the outer skin portion 60 and the laminated electric heater 62 with their matrix of holes 71 can be immersed into a chemical bath and the liquid in the anodising process can be forced through the holes 71 under pressure. The path of the liquid is shown by the arrows in Figure 7. The liquid enters the holes at A and exits the holes at B. This can ensure effective exposure of the inner surfaces to the liquid.

As shown in Figure 7, the anodising process in this example anodises only the exposed edges 63 of the electrically conducting layer in the laminated electric heater. Alternatively, and as described above, more of the inner surface of the holes can be anodised (for example the edges of the (typically metallic) outer skin portion 60) can also be anodised. Moreover, and as described above, the anodisation process can also be used to electrically insulate the metallic layer of the heater element at the same time as the inner surfaces of the holes are insulated.

Although any suitable insulating process may be used, a particular advantage of using an anodising process is that the insulating layer that is produced is particularly thin. This can prevent clogging or even closing off of the holes 71. Anodising also produces a robust insulation against short circuiting and earth leakage, as well as providing an effective form of protection against corrosion.

The leading edge structure described herein constitutes a highly effective system for combined noise abatement and ice protection. In contrast to ice protection systems that employ hot gases bled off from the engine, the structure described herein does not require the use of cumbersome pipe-work and the like. Accordingly, it can be incorporated into leading edges that are thinner in profile and that therefore produce less drag. This can improve the aerodynamic performance of the leading edge, leading to fuel efficiency savings. These savings are made in addition to fuel efficiency savings gained from not having to divert gases from the engine.

Moreover, because the leading edge structure described herein can allow the matrix of holes to extend away from the engine fans and cover the leading edge itself (this is best shown in Figure 2), the noise abatement system can produce approximately a 2 dB drop is noise emissions (for a hole size of 0.2 mm and a hole density of 7% surface coverage) compared to noise abatement systems that use hot gases. This is because in hot gas systems, the holes cannot coincide with the heated portion of the outer skin as otherwise the hot gases would simply escape through the holes.

Accordingly there has been described a leading edge structure for an aircraft and a method of making the same. The leading edge structure includes an outer skin, a laminated electric heater attached to an inner surface of the outer skin, and a matrix of holes that pass through the outer skin and the laminated electric heater. The holes that pass through the outer skin are substantially aligned with the holes that pass through the laminated electric heater.

## Claims

1. A method of making a leading edge structure for an aircraft, the method comprising:
attaching a laminated electric heater to an inner surface of an outer skin portion of the leading edge structure; and
forming a matrix of holes that pass through the outer skin portion and the laminated electric heater, wherein the holes that pass through the outer skin portion are substantially aligned with the holes that pass through the laminated electric heater.

2. The method of claim 1 comprising electrically insulating the inner surfaces of the holes that pass through the laminated electric heater.

3. The method of claim 2 comprising electrically insulating the inner surfaces of the holes that pass through the laminated electric heater using an anodising process.

4. The method of claim 3, wherein the anodising process comprises passing an electrolyte though the matrix of holes under pressure.

5. The method of any preceding claim, wherein the holes are formed by a laser drilling process.

6. The method of any preceding claim, wherein attaching the laminated electric heater to the inner surface includes coating the inner surface with an electrically insulating layer.

7. The method of claim 6, wherein attaching the laminated electric heater to the inner surface further includes applying an electrically conductive layer to the electrically insulating layer.

8. The method of Claim 7 comprising applying the metallic layer to the electrically insulating layer using an electroless plating method.

9. The method of Claim 7 or Claim 8, wherein the metallic layer comprises aluminium.

10. The method of any of Claims 1 to 5, wherein the laminated electric heater comprises one or more heater mats.

11. The method of claim 10, wherein the heater mats comprise aluminium heater elements.

12. The method of any preceding claim, wherein the matrix of holes has a density of between about 6% and about 11% surface coverage of the outer skin portion.

13. The method of claim 12, wherein the matrix of holes has a density of about 7% surface coverage of the outer skin portion.

14. The method of any preceding claim, wherein the holes are between about 0.02 mm and about 0.2 mm in diameter.

15. A method of making an aircraft engine including the method of any preceding claim.

16. A leading edge structure for an aircraft, the leading edge structure comprising:
an outer skin;
a laminated electric heater attached to an inner surface of the outer skin portion; and
a matrix of holes that pass through the outer skin portion and the laminated electric heater, wherein the holes that pass through the outer skin portion are substantially aligned with the holes that pass through the laminated electric heater.

17. The structure of claim 16, wherein the inner surfaces of the holes that pass through the laminated electric heater are electrically insulated.

18. The structure of claim 17 wherein the inner surfaces of the holes that pass through the laminated electric heater are anodised.

19. The structure of any of claims 16 to 18, wherein the holes are laser drilled.

20. The structure of any of claims 16 to 19, wherein the laminated electric heater includes an electrically insulating layer coating the inner surface.

21. The structure of claim 20, wherein the laminated electric heater further includes an electrically conductive layer applied to the electrically insulating layer.

22. The structure of Claim 21, wherein the metallic layer comprises aluminium.

23. The structure of any of Claims 16 to 19, wherein the laminated electric heater comprises one or more heater mats.

24. The structure of claim 23, wherein the heater mats comprise aluminium heater elements.

25. The structure of any of claims 16 to 24, wherein the matrix of holes has a density of between about 6% and about 11 % surface coverage of the outer skin portion.

26. The structure of claim 25, wherein the matrix of holes has a density of about 7% surface coverage of the outer skin portion.

27. The structure of any of claims 16 to 26, wherein the holes are between about 0.02 mm and about 0.2 mm in diameter.

28. An aircraft engine including the structure of any of claims 16 to 27.
